# EUROPÄISCHE PATENTSCHRIFT

(11) **EP 2 780 388 B1**
(45) Veröffentlichungstag und Bekanntmachung des Hinweises auf die Patenterteilung: **06.05.2015**
(21) Anmeldenummer: 12786988.1
(22) Anmeldetag: 14.11.2012
(51) Int. Cl.: C08G 59/40

(54) **VERWENDUNG VON N,N'-(DIMETHYL)-URONEN SOWIE VERFAHREN ZUR HÄRTUNG VON EPOXIDHARZ-ZUSAMMENSETZUNGEN**
USE OF N,N'-(DIMETHYL) URONS AND METHOD FOR CURING EPOXY RESIN COMPOSITIONS
UTILISATION DES N,N'-(DIMÉTHYLE)-URONES ET PROCÉDÉ DE DURCISSEMENT DES COMPOSITIONS DE RÉSINE ÉPOXYDE

(30) Priorität: 15.11.2011 DE 102011118760
(43) Veröffentlichungstag der Anmeldung: 24.09.2014
(73) Patentinhaber: AlzChem AG, 83308 Trostberg (DE)
(72) Erfinder: EICHHORN, Torsten, 60486 Frankfurt a.M. (DE); WINKLER, Claudia, 83352 Altenmarkt (DE); EBNER, Martin, 86438 Kissing (DE); KRIMMER, Hans-Peter, 84558 Kirchweidach (DE)
(74) Vertreter: Weickmann & Weickmann
(86) Internationale Anmeldenummer: PCT/EP2012/072593
(87) Internationale Veröffentlichungsnummer: WO 2013/072356

(56) Entgegenhaltungen:
- EP-A1- 0 603 131
- EP-A2- 0 298 742
- WO-A1-95/27761
- GB-A- 1 153 639
- GB-A- 2 300 187
- US-A- 4 283 520

## Beschreibung

Die vorliegende Erfindung betrifft die Verwendung von bis- oder multifunktionalen N,N'-(Dimethyl)-Uronen als Härter zur kontrollierten Härtung von Epoxidharz-Zusammensetzungen, ein Verfahren zur kontrollierten Härtung von Epoxidharz-Zusammensetzungen sowie Epoxidharz-Zusammensetzungen umfassend bis- oder multifunktionale N,N'-(Dimethyl)-Urone zur Herstellung von Formteilen.

Die Verwendung von duroplastischen Epoxidharzen ist aufgrund ihrer guten Chemikalienbeständigkeit, ihrer sehr guten thermischen und dynamischmechanischen Eigenschaften sowie ihres hohen elektrischen Isolationsvermögens weit verbreitet. Darüber hinaus zeigen Epoxidharze eine gute Haftung auf vielen Substraten und sind somit bestens für den Einsatz in Faserverbundwerkstoffen (Composites) geeignet. Für den Einsatz in Faserverbundwerkstoffen sind sowohl eine gute Benetzung der Faser, d. h. eine niedrige Viskosität der gewählten Harzformulierung zur Compositherstellung als auch hohe mechanische Eigenschaften wünschenswert.

Zur Herstellung von Formteilen aus Faserverbundwerkstoffen werden verschiedene Verfahren genutzt, wie beispielsweise das Prepregverfahren, verschiedene Infusions- oder Injektionsverfahren, hierbei insbesondere das RTM-Verfahren (Resin Transfer Molding). Von diesen Verfahren haben insbesondere die Infusions- oder Injektionsverfahren in den letzten Jahren an Bedeutung gewonnen. So werden beispielsweise in den Infusionsverfahren, bei denen in einem offenen Werkzeug befindliche trockene Verstärkungsmaterialien, wie beispielsweise Fasermatten, Vliesstoffe, Gewebe oder Gewirke, mit einer dichten Vakuumfolie abgedeckt und nach Anlegen des Vakuums über Verteilerkanäle mit Harzformulierungen getränkt. Diese Verfahren weisen den Vorteil auf, dass große Elemente mit komplizierten Geometrien in kurzer Zeit geformt werden können.

Die Härtung von Epoxidharzen verläuft nach unterschiedlichen Mechanismen. Neben der Härtung mit Phenolen oder Anhydriden wird häufig die Härtung mit Aminen durchgeführt. Diese Stoffe sind meist flüssig und lassen sich sehr gut mit Epoxidharzen vermengen. Aufgrund der hohen Reaktivität und damit sehr niedrigen Latenz werden derartige Epoxidharz-Zusammensetzungen zweikomponentig ausgeführt. Dies bedeutet, dass Harz (A-Komponente) und Härter (B-Komponente) getrennt aufbewahrt werden und erst kurz vor Gebrauch im korrekten Verhältnis gemischt werden. Hierbei bedeutet "latent", dass eine Mischung der Einzelkomponenten unter definierten Lagerbedingungen stabil vorliegt. Diese zweikomponentigen Harzformulierungen werden auch als sogenannte kalthärtende Harzformulierungen bezeichnet, wobei die dafür verwendeten Härter meist aus der Gruppe der Amine oder Amidoamine gewählt werden.

Einkomponentige, heißhärtende Epoxidharzformulierungen sind hingegen gebrauchsfähig fertig vorkonfektioniert, das heißt, dass Epoxidharz und Härter werkseitig vermischt vorliegen. Mischungsfehler der Einzelkomponenten bei Gebrauch vor Ort sind daher ausgeschlossen. Voraussetzung dafür bilden latente Härtersysteme, welche bei Raumtemperatur mit dem Epoxidharz nicht reagieren (lagerfähig sind), jedoch unter Erwärmung je nach Energieeintrag bereitwillig ausreagieren. Für solche einkomponentigen Epoxidharz-Formulierungen ist beispielsweise Dicyandiamid ein besonders geeigneter und auch kostengünstiger Härter. Unter Umgebungsbedingungen können entsprechende Harz-Härter-Mischungen bis zu 12 Monaten gebrauchsfähig gelagert werden.

Urone sind seit langer Zeit als Härtungsbeschleuniger zur beschleunigten Härtung von Epoxidharzen bekannt. So werden diese Urone in einer Vielzahl von Anwendungen in Kombination mit latenten Härtern wie beispielsweise Dicyandiamid eingesetzt. So wird die Verwendung von Dicyandiamid als latenter Härter in Kombination mit verschiedensten Uronen als Härtungsbeschleuniger auch in einer Vielzahl an Patentanmeldungen beschrieben. In diesem Zusammenhang sei beispielsweise auf die folgenden Dokumente verwiesen EP 603131 A1, EP 429395 A2, US 2,993,044 A, US 3,386,956 A, US 3,789,071, EP 2295483 A1, WO 2004/106402 A1, WO 2007/062853 A1.

Leider weisen Epoxidharzmischungen mit hoch latentem Dicyandiamid oder anderen hoch latenten Härtern den Nachteil auf, dass diese Epoxidharzmischungen sehr schnell und mit hohem Wärmeaustrag, d.h. unter Freisetzung von hohen Energiemengen, aushärten. Dieser Effekt ist umso deutlicher, wenn zur Härtung von Epoxidharzmischungen Dicyandiamid und ein Härtungsbeschleuniger, wie beispielsweise ein Uron eingesetzt wird. Diese Tatsache stellt für die mit der Konstruktion und Herstellung von Formteilen befassten Fachleute ein erhebliches Problem dar, da mit der freiwerdenden Energie die Formkörper je nach Schichtdicke Eigenspannungen erhalten. Diese Eigenspannungen führen zu Rissen in den Formteilen, wodurch die Formteile die geforderte mechanische Stabilität nicht erreichen. Sollte der Wärmeaustrag in Abhängigkeit der Schichtdicke viel zu hoch sein, so sind in Einzelfällen sogar Verkohlungen zu beobachten, wodurch die Formkörper gänzlich unbrauchbar werden.

Die Anwendung von Composite-Bauteilen als Ersatz von Metall- bzw. Holzbauteilen, wie zum Beispiel in Windkraftanlagen, wird zunehmend relevanter. So planen z. B. die Hersteller von Windkaftanlagen immer größere Aggregate, die von größeren Rotorblätter angetrieben werden. Bei der Herstellung dieser Rotorblätter muss die im Herstellungsprozess entstehende Wärme möglichst effektiv und gleichmäßig abgeführt werden, damit das Bauteil während dem Herstellungsprozess nicht thermisch geschädigt wird. Dies kann bei Verwendung von Epoxidharz-Zusammensetzungen die als Härtungssystem Dicyandiamid als Härter und Urone als Härtungsbeschleuniger umfassen nur unzureichend gewährleistet werden, da diese Systeme sehr schnell reagieren und große Wärmemengen innerhalb von kürzester Zeit abgeben. Durch die Härtung bei niedrigeren Temperaturen kann zwar die Reaktionsgeschwindigkeit in gewissen Bereichen gesteuert werden; allerdings wird in großen und massiven Bauteilen mit großen Schichtdicken an Epoxidharzen, wie beispielsweise Rotorblätter, sehr schnell ein Wärmestau durch ungenügende Wärmeabführung beobachtet. Daraus resultiert, dass sich die Härtungsreaktion unkontrolliert beschleunigt. Letztendlich resultiert hieraus eine thermische Schädigung im Bauteil.

Zur spannungsfreien Herstellung von großen und massiven Strukturbauteilen müssen diese möglichst gleichmäßig und damit auch langsamer gehärtet werden. Mit den üblichen Härtungssystemen aus Uronen als Beschleuniger und Dicyandiamid als Härter ist dies nur bedingt realisierbar, da es durch ungleichmäßige Wärmeabführung zu lokalen Wärmestaus und damit zu einer ungleichmäßigen Härtung kommen kann. Diese Gefahr ist besonders bei unregelmäßigen Bauteilen gegeben.

Daher liegt der vorliegenden Erfindung die Aufgabe zugrunde ein Verfahren zur kontrollierten Härtung von Epoxidharz-Zusammensetzungen, insbesondere für massive Bauteile mit großen Schichtdicken an Epoxidharz, sowie die hierfür benötigten Epoxidharz-Zusammensetzungen bereitzustellen. Durch dieses Verfahren soll ein gleichmäßiges Härten über einen gegebenen Zeitraum ermöglicht werden, ohne das in dem herzustellenden Form- oder Bauteilen Eigenspannungen oder sonstigen thermischen Schädigungen erfolgen.

Diese Aufgaben werden gelöst durch ein Verfahren und Verwendung gemäß Anspruch 1 und 2 der vorliegenden Erfindung.

Damit ist gemäß einer ersten Ausführung die Verwendung von bis- oder multifunktionalen N,N'-(Dimethyl)-Uronen der allgemeinen Formel (I) oder Mischungen hiervon, als Härter zur kontrollierten Härtung von Epoxidharz-Zusammensetzungen Gegenstand der vorliegenden Erfindung, mit

R - (NH-CO-N(CH₃)₂)ₙ Formel (I)

wobei
R = ein linearer oder verzweigter aliphatischer Rest, oder ein nichtsubstituierter, halogensubstituierter und/oder alkylsubstituierter aromatischer Rest, und
n = eine Zahl von 2 bis 20 bedeutet,
wobei die Epoxidharz-Zusammensetzung mindestens ein härtbares Epoxidharz umfasst, und wobei die Epoxidharz-Zusammensetzung das N,N'-(Dimethyl)-Uron der allgemeinen Formel (I) oder Mischungen hiervon in einer Menge umfasst, die während der Härtung bei einer Temperatur von 60 bis 180 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet. Vorzugsweise umfasst die Epoxidharz-Zusammensetzung neben dem N,N'-(Dimethyl)-Uron der allgemeinen Formel (I) oder Mischungen hiervon keine weiteren Härter, Co-Härter, Härtungsbeschleuniger oder anderer Katalysatoren zur Härtung von Epoxidharzen.

Gemäß einer zweiten Ausführung ist damit auch ein Verfahren zur kontrollierten Härtung von Epoxidharz-Zusammensetzungen sowie ein Verfahren zur Herstellung von Composites, mittels mindestens einem bis- oder multifunktionalem N,N'-(Dimethyl)-Uron der allgemeinen Formel (I) oder Mischungen hiervon als Härter, Gegenstand der vorliegenden Erfindung, mit

R - (NH-CO-N(CH₃)₂)ₙ Formel (I)

wobei
R = ein linearer oder verzweigter aliphatischer Rest, oder
   ein cycloaliphatischer Rest, oder
   ein nichtsubstituierter, halogensubstituierter und/oder alkylsubstituierter aromatischer Rest, und
n = eine Zahl von 2 bis 20 bedeutet,
wobei die Epoxidharz-Zusammensetzung mindestens ein härtbares Epoxidharz umfasst, und wobei die Epoxidharz-Zusammensetzung das N,N'-(Dimethyl)-Uron der allgemeinen Formel (I) oder Mischungen hiervon in einer Menge umfasst, die während der Härtung bei einer Temperatur von 60 bis 180 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet. Vorzugsweise umfasst die Epoxidharz-Zusammensetzung neben dem N,N'-(Dimethyl)-Uron der allgemeinen Formel (I) oder Mischungen hiervon keine weiteren Härter, Co-Härter, Härtungsbeschleuniger oder anderer Katalysatoren zur Härtung von Epoxidharzen.

Gemäß einer alternativen Ausführung ist auch die Verwendung von bis- oder multifunktionalem N,N'-(Dimethyl)-Uron der allgemeinen Formel (I) oder Mischungen hiervon als Härter zur kontrollierten Härtung von Epoxidharz-Zusammensetzungen, sowie ein Verfahren zur kontrollierten Härtung von Epoxidharz-Zusammensetzungen mittels mindestens einem bis- oder multifunktionalem N,N'-(Dimethyl)-Uron der allgemeinen Formel (I) oder Mischungen hiervon als Härter, sowie ein Verfahren zur Herstellung von Composites mittels mindestens einem bis- oder multifunktionalem N,N'-(Dimethyl)-Uron der allgemeinen Formel (I) oder Mischungen hiervon als Härter, Gegenstand der vorliegenden Erfindung, mit

R - (NH-CO-N(CH₃)₂)ₙ Formel (I)

wobei
R = ein linearer oder verzweigter aliphatischer Rest, oder
   ein cycloaliphatischer Rest, oder
   ein nichtsubstituierter, halogensubstituierter und/oder alkylsubstituierter aromatischer Rest, und
n = eine Zahl von 2 bis 20 bedeutet,
wobei die Epoxidharz-Zusammensetzung mindestens ein härtbares Epoxidharz und neben dem N,N'-(Dimethyl)-Uron der allgemeinen Formel (I) oder Mischungen hiervon keine weiteren Härter, Co-Härter, Härtungsbeschleuniger oder anderer Katalysatoren zur Härtung von Epoxidharzen umfasst. Vorzugsweise umfasst die Epoxidharz-Zusammensetzung das N,N'-(Dimethyl)-Uron der allgemeinen Formel (I) oder Mischungen hiervon in einer Menge, dass die Epoxidharz-Zusammensetzung vollständig aushärtet, und besonders bevorzugt in einer Menge, die während der Härtung bei einer Temperatur von 60 bis 180 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet.

Überraschender Weise hat sich herausgestellt, dass durch die Verwendung von N,N'-(Dimethyl)-Uron der allgemeinen Formel (I) oder Mischungen hiervon, insbesondere als alleinige Härter, und der gezielten Einstellung eines maximalen Wärmestroms von 0,05 bis 0,99 W/ g nun erstmals ein Verfahren bereitgestellt werden kann, das eine besonders spannungsarme Härtung von Epoxidharz-Zusammensetzungen ermöglicht. In den somit unter Verwendung dieser Urone hergestellten Formteilen sind keinerlei Risse oder sonstige thermische Schädigungen festzustellen. Die Härtung erfolgt hierbei über einen gegebenen Zeitraum besonders gleichmäßig, wodurch keine lokalen Überhitzungen oder Wärmestaus beobachtet werden. Zudem war nicht vorherzusehen, dass die Härtung vollständig erfolgt, d. h. dass eine vollständige Polymerisation der Epoxidharze erfolgt, so dass die Epoxidharze vollständig aushärten. Somit kann auch ein Verfahren zur Herstellung von Formteilen bereit bereitgestellt werden, das in Bezug auf die herzustellenden Formteile einen hohen Qualitätsstandart sichert.

Der maximale Wärmestrom wird erfindungsgemäß insbesondere isotherm mit einem Wärmestrom-Differenzkalorimeter (DSC822e, Mettler Toledo) gemessen und das Peak-Maximum als maximaler Wärmestrom bestimmt. Einzuhaltende Prüfungsbedingungen sind in den Beispielen aufgeführt.

So kann auch ein Verfahren zur schnellen aber schonenden Härtung massiver Bauteile bereit gestellt werden, in dem der Wärmestrom über die Auswahl bestimmter Urone als alleinige Härter eingesetzt auf das zu härtende Bauteil angepasst wird. Damit wird einerseits ermöglicht, dass unregelmäßige Bauteile möglichst gleichmäßig und damit spannungsfrei gehärtet werden. Andererseits kann die Härtungsgeschwindigkeit so optimiert werden, dass der Herstellungsprozess möglichst schnell, aber ohne thermische Beschädigung des Bauteils erfolgt.

Damit ist gemäß einer besonderen Ausführung auch die Verwendung von N,N'-(Dimethyl)-Uronen der allgemeinen Formel (I) als Härter zur kontrollierten Härtung von Epoxidharz-Zusammensetzungen oder ein Verfahren zur Härtung von Epoxidharz-Zusammensetzungen unter Verwendung von N,N'-(Dimethyl)-Uronen der allgemeinen Formel (I) als Härter Gegenstand der vorliegenden Erfindung, in denen die Epoxidharz-Zusammensetzung eine Schichtdicke von mindestens 0,5 mm, insbesondere mindestens 2 mm, insbesondere mindestens 4 mm, insbesondere mindestens 10 mm, insbesondere mindestens 20 mm, besonders bevorzugt mindestens 50 mm und ganz besonders bevorzugt von mindestens 100 mm aufweist. Gleichzeitig oder unabhängig hiervon kann die Schichtdicke höchstens 1000 mm, insbesondere höchstens 500 mm betragen.

Die Auswahl des geeigneten Urons für eine Formulierung erfolgt nach der gewünschten Härtungsgeschwindigkeit, der gewünschten Härtungstemperatur und/oder der Möglichkeit die entstehende Reaktionswärme möglichst gleichmäßig abzuführen. Aromatische Urone besitzen eine hohe Reaktivität, bei der in der exothermen Reaktion die entstehende Wärmemenge in einer kurzen Zeiteinheit abgegeben wird (hoher maximaler Wärmestrom). Aliphatische Urone besitzen dagegen eine deutlich niedrigere Reaktivität, bei der die entstehende Wärmemenge über einen großen Zeitraum abgegeben wird (niedriger maximaler Wärmestrom).

Im Zusammenhang mit der vorliegenden Erfindung ist dabei unter einem bis- oder multifunktionalen N,N'-(Dimethyl)Uron eine Substanz zu verstehen, die die mit Formel (I) wiedergegebene Struktur aufweist. Hierbei wird die Funktionalität alleine durch die Anzahl der Dimethylharnstoff-Substituenten bzw. -Reste bestimmt. Weiterhin soll im Folgenden unter einem Dimethylharnstoff -Substituent oder -Rest ein Rest oder Substituent gemäß Formel -(NH-CO-N(CH₃)₂) verstanden sein.

In einer ersten bevorzugten Ausführungsform werden erfindungsgemäß N,N'-(Dimethyl)-Uronen der Formel (I) eingesetzt, in denen R ein linearer oder verzweigter aliphatischer Rest ist. Solche Verbindungen weisen eine niedrige Reaktivität auf, so dass die entstehende Wärmemenge über einen großen Zeitraum abgegeben wird (niedriger maximaler Wärmestrom).

Der Rest R in Verbindungen der Formel (I) kann ein linearer oder verzweigter aliphatischer Rest sein. Gemäß der vorliegenden Erfindung kann ein linearer oder verzweigter aliphatischer Rest ein linearer oder verzweigter Alkylrest mit einer Kettenlänge bis zu 20 Kohlenstoffatomen sein, insbesondere ein Alkylrest, der die allgemeine Formel CₓH₂ₓ₊₂₋ₙ aufweist, wobei x = 1 bis 20, bevorzugt x = 1 bis 10, und n die Anzahl der Dimethylharnstoffsubstituenten mit n = eine ganze Zahl von 2 bis 20 bedeutet. Dabei ist weiterhin bevorzugt vorgesehen, dass Alkyl oder dieser aliphatische Rest Methyl, Ethyl, Propyl, Butyl, Pentyl, Hexyl, Heptyl, Octyl, Nonyl oder Decyl bedeutet, wobei diese Alkylreste weiterhin bevorzugt auch unverzweigt, einfach verzweigt, mehrfach verzweigt oder alkylsubstituiert sein können.

Bevorzugt sind solche Alkylreste, die ihrerseits einfach oder mehrfach mit C1- bis C5-Alkyl substituiert sind. C1- bis C5-Alkyl gemäß der vorliegenden Erfindung kann Methyl, Ethyl, n-Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,1-Dimethylpropyl, 1,2-Dimethylpropyl, 2,2-Dimethylpropyl oder 1-Ethylpropyl bedeuten.

Weiterhin bevorzugt kann ein Alkylrest, insbesondere Methyl, Ethyl, Propyl, Butyl, seinerseits, insbesondere mehrfach, auch mit einem C3- bis C15-Cycloalkylrest substituiert sein, wobei C3- bis C15-Cycloalkyl die unten wiedergegebene Bedeutung aufweist.

Hervorzuheben ist hierbei, dass die Dimethylharnstoffsubstituenten (Anzahl der Dimethylharnstoffsubstituenten n = 2 bis 20) Substituenten des Alkyl- oder Grundgerüstes als auch Substituent eines C1- bis C5-Alkylsubstituenten oder eines C1- bis C15-Cycloalkylsubstituenten sein können.

In einer weiteren Ausführungsform werden bevorzugt N,N'-(Dimethyl)-Uronen der allgemeinen Formel (I) eingesetzt, in denen R einen cycloaliphatischen Rest umfasst.

Der Rest R in Verbindungen der Formel (I) kann auch ein cycloaliphatischer Rest sein. Vorzugsweise weist der cycloaliphatische Rest 3-20 Kohlenstoffatome auf. Gemäß der vorliegenden Erfindung kann ein cycloaliphatischer Rest insbesondere C3-bis C20, bevorzugt C3- bis C15-Cycloalkyl bedeuten. R kann weiterhin bevorzugt einen monocyclischen oder bicyclischen Cycloalkylrest mit 3 bis 15 Kohlenstoffatomen bedeuten. Insbesondere bedeutet C3- bis C20-Cycloalkyl, vorzugsweise C3- bis C15-Cycloalkyl einen Cycloalkylrest, der die allgemeine Formel CₓH₂ₓ₋ₙ aufweist, wobei x = 1 bis 20 und n die Anzahl der Dimethylharnstoffsubstituenten mit n = eine ganze Zahl von 2 bis 20 bedeutet. Weiterhin bevorzugt kann C3- bis C15-Cycloalkyl Cyclopropyl, Cyclobutyl, Cyclopentyl, Cyclohexyl oder Cycloheptyl bedeuten, wobei diese Cycloalkylreste ihrerseits weiterhin bevorzugt einfach oder mehrfach mit C1- bis C5-Alkylresten der oben wiedergegebenen Bedeutung substituiert sein können. Hervorzuheben ist hierbei, dass die Dimethylharnstoffsubstituenten (Anzahl der Dimethylharnstoffsubstituenten n = 2 bis 20) Substituenten des Cycloalkyl-Grundgerüstes als auch Substituent eines C1- bis C5-Alkylrestes sein können.

In einer weiteren Ausführungsform der Erfindung werden vorzugsweise N,N'-(Dimethyl)-Urone der allgemeinen Formel (I) eingesetzt, in denen R ein nichtsubstituierter, halogensubstituierter und/oder alkylsubstituierter aromatischer Rest ist. Solche aromatische Urone besitzen eine hohe Reaktivität, so dass die entstehende Wärmemenge über einen kurzen Zeitraum abgegeben wird (hoher maximaler Wärmestrom).

Der Rest R in Verbindungen der Formel (I) kann auch ein nichtsubstituierter, halogen-substituierter und/oder alkylsubstituierter aromatischer Rest sein.

Halogen kann insbesondere Fluor, Chlor oder Brom bedeuten.

Gemäß der vorliegenden Erfindung kann ein nichtsubstituierter, halogensubstituierter und/oder alkylsubstituierter aromatischer Rest, insbesondere mit 1 bis 4 Kernen, verwendet werden. Besonders bevorzugt sind Phenyl- und Naphthylreste mit n = 2 bis 4 Dimethylharnstoffresten gemäß allgemeiner Formel (II) oder Formel (III).

Insbesondere kann ein nichtsubstituierter, halogensubstituierter und/oder alkylsubstituierter aromatischer Rest ein Rest der allgemeinen Formel (II) oder Formel (III) sein, mit 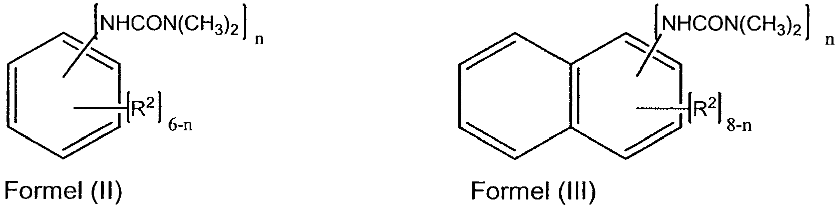 wobei gleichzeitig oder unabhängig gilt
R² = bei jedem Auftreten unabhängig voneinander ausgewählt aus H, Halogen und Alkyl
n = 2, 3 oder 4.

Halogen ist vorzugsweise Fluor, Chlor oder Brom.
Alkyl ist vorzugsweise C1- bis C5-Alkyl.

Gemäß der vorliegenden Erfindung kann n = eine Zahl von 2 bis 20 bedeuten, d.h., dass erfindungsgemäß Verbindungen mit 2 bis 20 Dimethylharnstoffresten eingesetzt werden können. Vorzugsweise ist n = eine ganze Zahl von 2 bis 10 und mehr bevorzugt ist n = eine ganze Zahl von 2 bis 8, und noch mehr bevorzugt ist n = 2 oder 3. Somit können gemäß der vorliegenden Erfindung insbesondere N,N'-(Dimethyl)-Diurone, N,N'-(Dimethyl)-Triurone oder N,N'-(Dimethyl)-Oligourone, der allgemeinen Formel (I) oder Mischungen hiervon, mit zwei, drei oder bis zu 20 Dimethylharnstoffresten, eingesetzt werden. Besonders bevorzugt sind hierbei N,N'-(Dimethyl)-Diurone mit n = 2 und N,N'-(Dimethyl)-Triurone mit n = 3. Darüber hinaus sind weiterhin Oligourone mit n = 4 bis 20 bevorzugt, wobei n eine Zahl von 4 bis 20 sein kann. Hervorzuheben ist, dass der Wahl des Grundgerüstes eine untergeordnete Bedeutung zukommt.

Ganz besonders bevorzugt können gemäß der vorliegenden Verbindung N,N'-(Dimethyl)-Urone der allgemeiner Formel (I) ausgewählt aus der Gruppe Bis[4-(N,N-dimethylurea)cyclohexyl]methane (H12MDI-Uron), 1,1'-hexamethylenebis[3,3-dimethyl-urea] (HDI-Uron), N,N"-1,5-naphthalenediylbis[N',N'-dimethyl-urea] (NDI-Uron), 1,1'-m-Xylylenebis(3,3-dimethylurea) (MXDI-Uron), N,N"-1,4-phenylenebis[N',N'-dimethyl-urea] (PDI-Uron), 4,4'-Methylenediphenylene bis(dimethylurea) (MDI-Uron), 1-(N,N-Dimethylurea)-3-(N,N-dimethylureamethyl)-3,5,5-trimethylcyclohexane (IPDI-Uron) und/ oder Mischungen hiervon verwendet werden.

Weiterhin bevorzugt ist gemäß der vorliegenden Erfindung, dass mindestens zwei verschiedene N,N'-(Dimethyl)-Urone der allgemeinen Formel (I) als Härter eingesetzt werden.

Es hat sich erfindungsgemäß insbesondere herausgestellt, dass N,N'-(Dimethyl)-Urone der allgemeinen Formel (I) als alleinige Härter in Epoxidharz-Zusammensetzungen eingesetzt werden können. Entsprechend können diese Epoxidharz-Zusammensetzungen frei von weiteren Härtern, Co-Härtern, Härtungsbeschleunigern und/oder Katalysatoren zur Härtung von Epoxidharzen sein.

Erfindungsgemäß können die Epoxidharz-Zusammensetzungen frei von solchen Substanzen sein, also insbesondere einen Gehalt von ≤ 1 Gew.-%, noch mehr bevorzugt ≤0,1 Gew.-%, noch mehr bevorzugt ≤ 0,001 Gew.-% und noch mehr bevorzugt von 0 Gew.-% an solchen Verbindungen, bezogen auf das Gesamtgewicht der Epoxidharz-Zusammensetzung, umfassen.

In einer bevorzugten Ausführungsform umfasst die gesamte Epoxidharz-Zusammensetzung neben den Alkyl- oder Dialkyl-Semicarbazonen der allgemeinen Formel (I) keine weiteren Härter und/oder Co-Härter. Insbesondere ist die Epoxid-Zusammensetzung frei von weiteren Härtern und/oder Co-Härtern. Übliche Härter und/oder Co-Härter sind beispielsweise aliphatische, cycloaliphatische und aromatische Amine, Polyamine, Amido-Amine, Polyamide, Ketimine , Mercaptane, Isocyanate, Anhydride, Carbonsäuren, Polyphenole, Aminoharze und Phenolharze sowie Dicyandiamid.

Frei von weiteren Härtern und/oder Co-Härtern bedeutet dabei insbesondere, dass das Gesamtsystem insgesamt einen Gehalt an weiteren Verbindungen, die als Härter und/oder Co-Härter angesehen werden können, von weniger als 1 Gew.-%, bezogen auf die gesamte Epoxidharz-Zusammensetzung, insbesondere von weniger als 0,1 Gew.-%, noch mehr bevorzugt von weniger als 0,01 Gew.-% und besonders bevorzugt von 0 Gew.-% aufweist.

In einer weiteren Ausführungsform ist die erfindungsgemäße Expoxidharz-Zusammensetzung frei von Härtungsbeschleunigern und/oder Katalysatoren zur Härtung von Epoxidharzen. Übliche Härtungsbeschleuniger und/oder Katalysatoren zur Härtung von Epoxidharzen sind beispielsweise tertiäre Amine, Imidazole, Urone, Verbindungen auf der Basis von Bortrifluorid, Titanatverbindungen.

Frei von weiteren Härtungsbeschleuniger und/oder Katalysatoren zur Härtung von Epoxidharzen bedeutet dabei insbesondere, dass das Gesamtsystem insgesamt einen Gehalt an weiteren Verbindungen, die als Härtungsbeschleuniger und/oder Katalysatoren zur Härtung von Epoxidharzen angesehen werden können, von weniger als 1 Gew.-%, bezogen auf die gesamte Epoxidharz-Zusammensetzung, insbesondere von weniger als 0,1 Gew.-%, noch mehr bevorzugt von weniger als 0,01 Gew.-% und besonders bevorzugt von 0 Gew.-% aufweist.

In der am meisten bevorzugten Ausführungsform ist die Epoxidharz-Zusammensetzung neben den Alkyl- oder Dialkylsemicarbazonen der allgemeinen Formel (I) oder Mischungen davon frei von weiteren Härtern, Co-Härtern, Härtungsbeschleunigern und Katalysatoren zur Härtung von Epoxidharzen.

In Weiterbildung der vorliegenden Erfindung sind ebenso Epoxidharz-Zusammensetzungen zur Herstellung von Formteilen umfassend a) mindestens ein härtbares Epoxidharz und b) mindestens einen Härter für Epoxidharze ausgewählt aus der Gruppe der bis- oder multifunktionalen N,N'-(Dimethyl)-Urone der allgemeinen Formel (I) oder Mischungen hiervon Gegenstand der vorliegenden Erfindung, mit

R - (NH-CO-N(CH₃)₂)ₙ Formel (I)

wobei
R = ein linearer oder verzweigter aliphatischer Rest, oder
   ein linearer oder verzweigter cycloaliphatischer Rest, oder
   ein nichtsubstituierter, halogensubstituierter und/oder alkylsubstituierter aromatischer Rest, und
n = eine Zahl von 2 bis 20 bedeutet,

Vorzugsweise umfasst die Epoxidharz-Zusammensetzung neben dem Härter aus der Gruppe der N,N'-(Dimethyl)-Urone der allgemeinen Formel (I) oder Mischungen hiervon keine weiteren Härter, Co-Härter, Härtungsbeschleuniger oder andere Katalysatoren zur Härtung von Epoxidharzen. Weiterhin vorzugsweise umfasst die Epoxidharz-Zusammensetzung den Härter aus der Gruppe der N,N'-(Dimethyl)-Urone der allgemeinen Formel (I) oder Mischungen hiervon in einer Menge, die während der Härtung Epoxidharz-Zusammensetzung bei einer Temperatur von 60 bis 180 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet.

Im Hinblick auf die härtbaren Epoxidharze unterliegt die vorliegende Erfindung keinerlei Beschränkung. Es kommen insbesondere sämtliche handelsüblichen Produkte in Frage, die üblicherweise mehr als eine 1,2-Epoxidgruppe (Oxiran) aufweisen und dabei gesättigt oder ungesättigt, aliphatisch, cycloaliphatisch, aromatisch oder heterozyklisch sein können. Außerdem können die Epoxidharze Substituenten wie Halogene, Phosphor- und Hydroxyl-Gruppen aufweisen. Epoxidharze auf Basis Glycidylpolyether von 2,2-Bis(4-hydroxyphenyl)-propan (Bisphenol A) sowie das mit Brom substituierte Derivat (Tetrabrombisphenol A), Glycidylpolyether von 2,2-Bis(4-hydroxyphenyl)methan (Bisphenol F) und Glycidylpolyether von Novolacken sowie auf Basis von Anilin oder substituierten Anilinen wie beispielsweise p-Aminophenol oder 4,4'-Diaminodiphenylmethane können durch Verwendung der erfindungsgemäßen Härter besonders gut gehärtet werden.

Damit umfasst eine bevorzugte Epoxidharz-Zusammensetzung als härtbares Epoxidharz insbesondere mindestens ein Epoxidharz aus der Gruppe der Epoxidharze auf Basis Glycidylpolyether von 2,2-Bis(4-hydroxyphenyl)propan (Bisphenol A), dessen mit Brom substituiertes Derivat (Tetrabrombisphenol A), Glycidylpolyether von 2,2-Bis(4-hydroxyphenyl)-methan (Bisphenol F) und/oder Glycidylpolyether von Novolac-Harzen.

Die Einsatzmenge der erfindungsgemäßen Härter kann weiterhin bevorzugt auf 0,01 bis 15 Teile N,N'-(Dimethyl)-Uron gemäß Formel (I) oder Mischungen hiervon pro 100 Teile Harz, vorzugsweise 0,1 bis 15 Teile, vorzugsweise 1 bis 15 Teile und ganz besonders bevorzugt 2 bis 15 Teile pro 100 Teile Harz, eingestellt werden. Weiterhin bevorzugt sind Einsatzmengen in den auf 100 Teile Harz 1 bis 12 Teile, insbesondere 2 bis 12 Teile, weiterhin bevorzugt 3 bis 12 Teile, besonders bevorzugt 4 bis 12 Teile und ganz besonders bevorzugt 5 bis 12 Teile N,N'-(Dimethyl)-Uron gemäß Formel (I) oder Mischungen hiervon eingesetzt werden. Auch eine Kombination mehrerer erfindungsgemäßer Härter insbesondere in dem hier angegebenen Verhältnis wird durch diese Erfindung abgedeckt.

Mit diesen Mengen lässt sich erfindungsgemäß bei einer Temperatur von 60 bis 180 °C ein maximaler Wärmestrom von 0,05 bis 0,99 W/g (bezogen auf die Masse an Epoxidharz) in der Epoxidharz-Zusammensetzung erzeugen, so dass die Epoxidharz-Zusammensetzung vollständig aushärtet.

Damit kann bevorzugt gemäß der vorliegenden Erfindung eine Epoxidharz-Zusammensetzung 0,01 bis 10 Gew.-% (bezogen auf die Masse der Epoxidharz-Zusammensetzung) an N,N'-(Dimethyl)-Uron gemäß Formel (I) oder Mischugnen hiervon umfassen. Besonders bevorzugt sind Epoxidharz-Zusammensetzungen, die mindestens 0,01 Gew.-%, insbesondere mindestens 0,1 Gew.-%, besonders bevorzugt mindestens 1,0 Gew.-% und gleichzeitig höchstens 10 Gew.-%, insbesondere höchstens 8 Gew.-% und ganz besonders höchstens 7 Gew.-% N,N'-(Dimethyl)-Uron gemäß Formel (I) oder Mischungen hiervon umfassen.

Gemäß einer bevorzugten Epoxidharz-Zusammensetzung oder des hierein beschriebenen Verfahrens oder Verwendung ist gemäß der vorliegenden Erfindung insbesondere auch vorgesehen, dass die Epoxidharz-Zusammensetzung das N,N'-(Dimethyl)-Uron der allgemeinen Formel (I) oder Mischungen hiervon in einer Menge umfasst, die während der Härtung bei einer Temperatur von 60 bis 180 °C, insbesondere von 60 bis 160 °C und ganz besonders bevorzugt von 60 bis 150 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet. Es kann jedoch auch vorgesehen sein, dass die Epoxidharz-Zusammensetzung das N,N'-(Dimethyl)-Uron der allgemeinen Formel (I) oder Mischungen hiervon in einer Menge umfasst, die während der Härtung bei einer Temperatur von 80 bis 160 °C, insbesondere von 90 bis 160 °C und ganz besonders bevorzugt von 100 bis 160 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet.

Gleichzeitig oder unabhängig hiervon kann vorgesehen sein, dass die Menge an N,N'-(Dimethyl)-Uronen der allgemeinen Formel (I) oder Mischungen hiervon einen maximalen Wärmestrom von 0,05 bis 0,99 W/ g, insbesondere 0,05 bis 0,80 W/ g, besonders bevorzugt 0,05 bis 0,70 W/ g und ganz besonders bevorzugt 0,05 bis 0,60 W/ g (bezogen auf die Masse der Epoxidharz-Zusammensetzung) in der Epoxidharz-Zusammensetzung erzeugt, so dass die Epoxidharz-Zusammensetzung vollständig aushärtet.

Erfindungsgemäß härtet die Epoxidharz-Zusammensetzung vollständig aus. Dies bedeutet insbesondere, dass die Epoxidharz-Zusammensetzung zu ≥ 80 %, bevorzugt zu ≥90 %, mehr bevorzugt zu ≥95 %, noch mehr bevorzugt zu ≥98 %, insbesondere zu ≥99 % und am meisten bevorzugt zu 100 % aushärtet. Entsprechend haben die Epoxy-Gruppen in der ausgehärteten Epoxidharz-Zusammensetzung insbesondere zu ≥80 %, bevorzugt zu ≥90 %, mehr bevorzugt zu ≥ 95 %, noch mehr bevorzugt zu ≥98 %, insbesondere zu ≥99 % und am meisten bevorzugt zu 100 % reagiert.

Der Anteil an nicht umgesetzten Epoxy-Gruppen in der ausgehärteten Epoxidharz-Zusammensetzung beträgt insbesondere < 20 %, bevorzugt < 10 %, mehr bevorzugt < 5 %, noch mehr bevorzugt < 2 %, insbesondere < 1 % und am meisten bevorzugt 0%.

Durch den Zusatz weiterer handelsüblicher Additive, wie sie dem Fachmann zur Härtung von Epoxidharzen bekannt sind, kann das Härtungsprofil der erfindungsgemäßen Formulierungen variiert werden. Additive zur Verbesserung der Verarbeitbarkeit der unausgehärteten Epoxidharz-Zusammensetzungen oder zur Anpassung der thermisch-mechanischen Eigenschaften der duroplastischen Produkte an das Anforderungsprofil umfassen beispielsweise Reaktivverdünner, Füllstoffe, Rheologieadditive wie Thixotropierungsmittel oder Dispergieradditive, Defoamer, Farbstoffe, Pigmente, Zähmodifikatoren, Schlagzähverbesserer oder Brandschutzadditive.

Epoxidharz-Formulierungen mit den erfindungsgemäßen Härter eignen sich sowohl für manuelle als auch maschinelle Verarbeitungsverfahren und im Besonderen zur Herstellung von imprägnierten Verstärkungsfasern und Composits, wie sie u.a. in den Schriften von G. W. Ehrenstein, Faserverbund-Kunststoffe, 2006, 2. Auflage, Carl Hanser Verlag, München, Kapitel 5, Seite 148ff, und M. Reyne, Composite Solutions, 2006, JEC Publications, Kapitel 5, Seite 51ff, beschrieben sind. Neben dem Einsatz in Prepreg-Verfahren ist insbesondere die Handhabung in Infusions- und Injektionsverfahren eine bevorzugte Verarbeitungsform. Hierbei sind die im Allgemeinen sehr guten Mischbarkeiten der erfindungsgemäßen Härter in den Epoxidharzen von Vorteil.

Damit sind ebenfalls die Verwendung von Epoxidharz-Zusammensetzungen der oben beschriebenen Art zur Herstellung von Formteilen, insbesondere Hohlkörpern Gegenstand der vorliegenden Erfindung. Insbesondere ist diese Verwendung auf die Herstellung von Formteilen, insbesondere Hohlkörpern, gerichtet, die eine Schichtdicke oder Wandung von 4 bis 1000 mm aufweisen, insbesondere von mindestens 10 mm, bevorzugt mindestens 50 mm und noch mehr bevorzugt mindestens 100 mm, und insbesondere bis zu 500 mm.

Aufgrund der günstigen Anwendungseigenschaften der erfindungsgemäßen Härter sowie ihre kostengünstige Herstellung und einhergehend ein vorteilhaftes Kosten-Nutzen-Verhältnis sind diese besonders gut für die Herstellung von Formteilen, Composits oder anderen Massiven Bauteilen geeignet. Somit ist ebenfalls ein Composit-Material oder Formteil Gegenstand der vorliegenden Erfindung, das ein Verstärkungs- und/ oder Trägermaterial und eine Epoxidharz-Zusammensetzung oben beschriebener Art umfasst.

Als Verstärkungsmaterial können hierbei alle üblichen Verstärkungsmaterialien eingesetzt werden. Hierbei sind insbesondere jedoch nicht abschließend zu nennen: Fasern aus Glas, Kohlenstoff, Aramid und Holz bzw. Naturfasern.

Im Folgenden wird die vorliegende Erfindung anhand von Beispielen erläutert, wobei die Erfindung jedoch nicht auf die Beispiele reduziert verstanden werden soll. Es ist vielmehr der Fall, dass jede Kombination von bevorzugten Ausführungen ebenfalls von der vorliegenden Erfindung umfasst wird.

### Beispiele

1) Verwendete Substanzen:
Epoxidharz:
Epikot 828 LVEL (E.828, Momentive): Bisphenol A-Flüssigharz (EEW 182 - 187)

| Härter: | |
|---|---|
| S1 (AlzChem AG): | Bis[4-(N,N-dimethylurea)cyclohexyl]methane |
| | - CAS: 52188-81-5 (H12MDI-Uron) |
| S2 (AlzChem AG): | 1,1'-hexamethylenebis[3,3-dimethyl-urea] |
| | - CAS: 20575-76-2 (HDI-Uron) |
| S4 (AlzChem AG): | N,N"-1,5-naphthalenediylbis[N',N'-dimethyl-urea] |
| | - CAS: 73019-17-7 (NDI-Uron) |
| S5 (AlzChem AG): | 1,1'-m-Xylylenebis(3,3-dimethylurea) |
| | - CAS: 16578-48-6 (MXDI-Uron) |
| S6 (AlzChem AG): | N,N"-1,4-phenylenebis[N',N'-dimethyl-urea] |
| | - CAS: 89305-77-1 (PDI-Uron) |
| VP114 (AlzChem AG): | 4,4'-Methylenediphenylene bis(dimethylurea) |
| | - CAS: 10097-09-3 (MDI-Uron) |
| VP115 (AlzChem AG): | 1-(N,N-Dimethylurea)-3-(N,N-dimethylureamethyl)-3,5,5-trimethylcyclohexane |
| | - CAS: 39992-90-0 (IPDI-Uron) |
| DCD (DYHARD® 100S, AlzChem AG): | Dicyandiamid (<10 µm) |
| | - CAS: 461-58-5 |

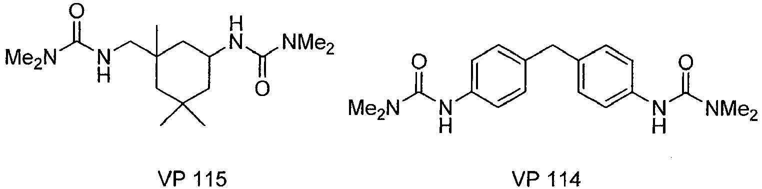

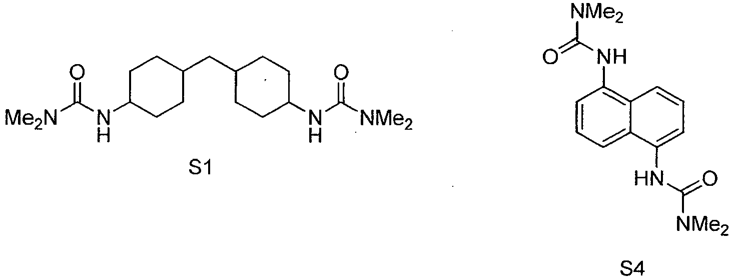

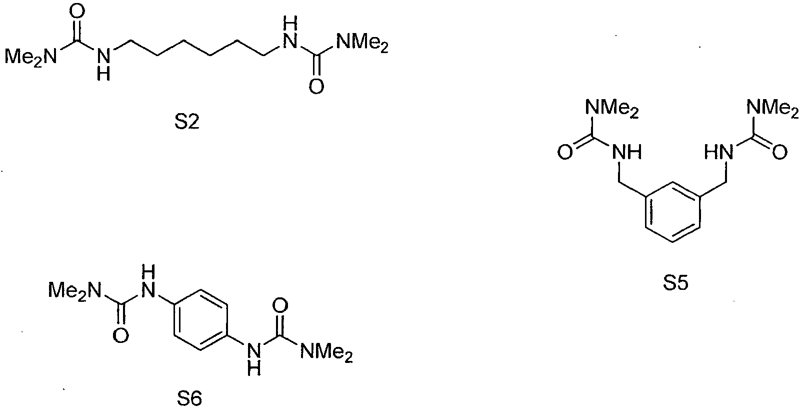

2) Die in den folgenden Beispielen genannten Daten und Messwerte wurde nach folgenden Messmethoden erhoben:
a. Durchführung der DSC-Messungen mittels eines Wärmestrom-Differenzkalorimeter (DSC822e, Mettler Toledo):
   i. dynamisch: Als Temperaturprogramm für die Bestimmung der Peak-Temperatur (DSC Peak T) wird mit einer Rate von 10 K/min von 30 - 250 (nach Bedarf bis 400 °C) aufgeheizt. Die Onset-Temperatur wird aus der selben Messung durch anlegen der Tangente an den Reaktionspeak bestimmt. Der Energieinhalt wird durch Integration der Fläche unter dem Peak aus der selben Messung berechnet.
   ii. isotherm: Für die Ermittlung der isothermen Reaktionszeit und des maximalen Wärmestroms (Peak bei isothermer DSC-Messung bei gegebener Temperatur) wird die Probe mit einer Rate von 20 K/min von 30 °C auf die angegebene Soll-Temperatur T aufgeheizt und anschließend für die Zeit t konstant gehalten. Die Reaktion ist beendet, wenn der Wärmestrom nach dem Maximum wieder die Basislinie bei der gegebenen Temperatur erreicht hat. Bei der Auswertung des zeitlichen Verlaufs entspricht der positive Peak dem maximalen Wärmestrom der Härtungsreaktion. Die integrierte Fläche unter dem Peak derselben Messung ist der Energieinhalt der Reaktion. Die Onset-Temperatur wird aus derselben Messung durch anlegen der Tangente an den Reaktionspeak bestimmt.
   iii. Messung der Glasübergangstemperatur (Tg):
      - maximale Glastemperatur (End-Tg):
         Für die Bestimmung der maximalen Glasübergangstemperatur (End-Tg) wurde das Material aus der Gelzeitbestimmung herangezogen. Die Formulierung wurde durch erhitzen auf 200 °C und halten der Temperatur für 10 min (Temperaturprogramm: 30 °C bis 200 °C, Heizrate: 20 K/min, Hold: 10 min) vollständig ausgehärtet. Nach Abkühlen auf 50 °C wurde die Probe zwei mal mit einer Heizrate von 20 K/min auf 200 °C aufgeheizt (2x [Temperaturprogramm: 50 °C bis 200 °C, Heizrate: 20 K/min, Hold: 10 min], Kühlrate: -20 K/min) und durch Anlegen der Tangente im Wendepunkt der größten Änderung der Wärmekapazität der End-Tg bestimmt. Aus den beiden bestimmten End-Tg's wurde das arithmetische Mittel ermittelt.
      - Glasübergangstemperatur eines Probekörpers (Tg):
         Für die Bestimmung des Tg eines bei gegebener Temperatur gehärteten Probekörpers wurde das Material auf 250 °C (Temperaturprogramm: 30 °C bis 250 °C, Heizrate: 10 K/min) erhitzt. Der Tg wurde durch Anlegen der Tangente im Wendepunkt der größten Änderung der Wärmekapazität in der Heizkurve bestimmt.
b. Ermittlung der Gelzeit
   In einem Aluminiumtiegel wurden ca. 0.5 g der jeweils frisch hergestellten Formulierungen eingewogen und in einem auf 140 °C vorgewärmten Heizblock erwärmt, wobei die Zeit der Erwärmung mittels einer Stoppuhr gemessen wird. Durch Umrühren mit einem Zahnstocher wird der Zeitpunkt bestimmt, an dem die Formulierung gelartig wird und der Tiegel an dem Zahnstocher aus dem Heizblock gehoben werden kann.
c. Ermittlung der Lagerstabilität:
   Als Startwert (0 h) wurden zunächst die dynamischen Viskositäten der jeweils frisch hergestellten Formulierungen bei 25 °C mittels eines Haake-Viskosimeters (Methode Kegel (1°)-Platte) ermittelt. Die Proben wurden dann bei der geforderten Temperatur gelagert (Raumtemperatur: Klimaschrank (T = 23 °C, rel. Feuchte = 50%; höhere Temperaturen: Ofen bei angegebener Temperatur) und die Viskosität in regelmäßigen Abständen erneut bei 25 °C gemessen.

3) Verfahren zur Herstellung einer Harzformulierung für Probekörper für mechanische Untersuchungen, für thermodynamische Untersuchungen und Untersuchungen bezüglich der Lagerstabilität.
a. In einem 1 L-Dissolver-Gefäß werden 600 g E.828 und 48 g (0.182 mol, 8 phr) mikronisiertes UR 500 (3,3'-(4-Methyl-1,3-phenylene)bis(1,1-dimethylharnstoff) eingewogen. Das Reaktionsgemisch wird mit einem Dissolver (Dispermat, VMA-Getzmann) bei 1500 U/min für 30 min dispergiert. Anschließend wird die entstandene Mischung bei 50 - 60 U/min unter Vakuum (ca. 30 mbar) ca. 2 h entgast. Die Formulierung ist gebrauchsfertig, wenn keine erkennbaren Blasen mehr an der Oberfläche sich befinden.
b. In einem 1 L-Dissolver-Gefäß werden 600 g E.828 und 48 g (0.141 mol, 8 phr) mikronisiertes VP 114 eingewogen. Das Reaktionsgemisch wird mit einem Dissolver (Dispermat, VMA-Getzmann) bei 1500 U/min für 30 min dispergiert. Anschließend wird die entstandene Mischung bei 50 - 60 U/min unter Vakuum (ca. 30 mbar) ca. 2 h entgast. Die Formulierung ist gebrauchsfertig, wenn keine erkennbaren Blasen mehr an der Oberfläche sich befinden.
c. In einem 1 L-Dissolver-Gefäß werden 600 g E.828 und 48 g (0.154 mol, 8 phr) mikronisiertes VP 115 eingewogen. Das Reaktionsgemisch wird mit einem Dissolver (Dispermat, VMA-Getzmann) bei 1500 U/min für 30 min dispergiert. Anschließend wird die entstandene Mischung bei 50 - 60 U/min unter Vakuum (ca. 30 mbar) ca. 2 h entgast. Die Formulierung ist gebrauchsfertig, wenn keine erkennbaren Blasen mehr an der Oberfläche sich befinden.
d. In einem 1 L-Dissolver-Gefäß werden 600 g E.828 und 24 g (0.071 mol, 4 phr) mikronisiertes VP 114 und 24 g (0.077 mol, 4 phr) mikronisiertes VP 115 eingewogen. Das Reaktionsgemisch wird mit einem Dissolver (Dispermat, VMA-Getzmann) bei 1500 U/min für 30 min dispergiert. Anschließend wird die entstandene Mischung bei 50 - 60 U/min unter Vakuum (ca. 30 mbar) ca. 2 h entgast. Die Formulierung ist gebrauchsfertig, wenn keine erkennbaren Blasen mehr an der Oberfläche sich befinden.
e. In einem 1 L-Dissolver-Gefäß werden 600 g E.828 und 24 g (0.071 mol, 4 phr) mikronisiertes VP 114 und 24 g (0.091 mol, 4 phr) mikronisiertes UR 500 eingewogen. Das Reaktionsgemisch wird mit einem Dissolver (Dispermat, VMA-Getzmann) bei 1500 U/min für 30 min dispergiert. Anschließend wird die entstandene Mischung bei 50 - 60 U/min unter Vakuum (ca. 30 mbar) ca. 2 h entgast. Die Formulierung ist gebrauchsfertig, wenn keine erkennbaren Blasen mehr an der Oberfläche sich befinden.
f. In einem 1 L-Dissolver-Gefäß werden 600 g E.828 und 24 g (0.077 mol, 4 phr) mikronisiertes VP 115 und 24 g (0.091 mol, 4 phr) mikronisiertes UR 500 eingewogen. Das Reaktionsgemisch wird mit einem Dissolver (Dispermat, VMA-Getzmann) bei 1500 U/min für 30 min dispergiert. Anschließend wird die entstandene Mischung bei 50 - 60 U/min unter Vakuum (ca. 30 mbar) ca. 2 h entgast. Die Formulierung ist gebrauchsfertig, wenn keine erkennbaren Blasen mehr an der Oberfläche sich befinden.

**Tabelle 1: Erfindungsgemäße Epoxidharz-Zusammensetzungen und deren Härtungsverhalten**

| *Zusammensetzung Nr. (erfindungsgemäß)* | *Zusammensetzung der Harzformulierung (Teile)* | *dyn. DSC Peak [°C]* | *dyn. DSC Onset [°C]* | *Gelzeit bei 140°C [min:sec]* | *End-Tg [°C]* | *isotherme DSC Peak bei Temp. [min.sec]* | *isotherm. DSC: max. Wärmestrom bei Temp. [W*/*g]* |
|---|---|---|---|---|---|---|---|
| 3.a. (ja) | E.828 + UR 500 (100:8) | 177 | 152 | 14:00 | 96 | 140°C/9:05 | 140°C/0,35 |
| | | | | | | 120°C/17:35 | 120°C/0,23 |
| | | | | | | 100°C/36:25 | 100°C/0,13 |
| | | | | | | 80°C/118:35 | 80°C/0,03 |
| 3.b. (ja) | E.828 + VP 114 (100 : 8) | 184 | 169 | 18:00 | 97 | 140°C/10:35 | 140°C/0,39 |
| | | | | | | 120°C/47:00 | 120°C/0,18 |
| | | | | | | 100°C/141:30 | 100°C/0,06 |
| | | | | | | 80°C/>480:00 | 80°C/0,01 |
| 3.c. (ja) | E.828 + VP 115 (100: 8) | 197 | 176 | 32:00 | 101 | 140°C/ 28:39 | 140°C/0,22 |
| | | | | | | 120°C/130:35 | 120°C/0,06 |
| | | | | | | 100°C/>360:00 | 100°C/0,01 |
| 3.d. (ja) | E.828 + VP 114 + VP 115 (100 : 4: 4) | 191 | 163 | 23:00 | 97 | 140°C/14:30 | 140°C/0,21 |
| 3.e. (ja) | E.828 + VP 114 + UR 500 (100 : 4 : 4) | 176 | 153 | 14:15 | 98 | 140°C/8:20 | 140°C/0,37 |
| 3.f. (ja) | E.828 + VP 115 + UR 500 (100:4:4) | 187 | 155 | 18:00 | 99 | 140°C/10:55 | 140°C/0,30 |
| S1 (ja) | E.828 + H12MDI-Uron (100 : 8) | 202 | 183 | 40:45 | 99 | 140°C/33:25 | 140°C/0,15 |
| | | | | | | 120°C/107:50 | 120°C/0,07 |
| S2 (ja) | E.828 + HDI-Uron (100: 8) | 197 | 175 | 29:50 | 93 | 140°C/29:15 | 140°C/0,19 |
| | | | | | | 120°C/100:35 | 120°C/0,07 |
| S4 (ja) | E.828 + NDI-Uron (100 : 8) | 190 | 179 | 11:50 | 98 | 140°C/15:30 | 140°C/0,24 |
| | | | | | | 120°C/41:00 | 120°C/0,12 |
| | | | | | | 100°C/154:25 | 100°C/0,04 |
| S5 (ja) | E.828 + MXDI-Uron (100 : 8) | 190 | 166 | 22:05 | 93 | 140°C/20:35 | 140°C/0,27 |
| S6 (ja) | E.828 + PDI-Uron (100 : 8) | 200 | 190 | 34:20 | 96 | 140°C/29:50 | 140°C/0,24 |

**Tabelle 2: Epoxidharz-Zusammensetzungen (Vergleichsbeispiele) und deren Härtungsverhalten**

| *Zusammensetzung Nr. (erfindungsgemäß)* | *Zusammensetzung der Harzformulierung (Teile)* | *dyn. DSC Peak [°C]* | *dyn. DSC Onset [°C]* | *Gelzeit bei 140°C [min:sec]* | *End-Tg [°C]* | *isotherme DSC Peak bei Temp. [min:sec]* | *isotherm. DSC: max. Wärmestrom bei Temp. [W*/*g]* |
|---|---|---|---|---|---|---|---|
| 3.g. (nein) | E.828 + DYHARD 100S (100 : 6.5) | 198 | 192 | >120:00 | 169 | 170°C/14:30 | 170°C/0,29 |
| | | | | | | | 140°C/n. a. |
| 3.h. (nein) | E.828 + DCD + UR 500 (100 : 6.5 : 3) | 143 | 135 | 2:45 | 134 | 140°C/1:17 | 140°C/3,4 |
| | | | | | | 120°C/5:50 | 120°C/0,95 |
| | | | | | | 100°C/26:10 | 100°C/0,22 |
| | | | | | | 80°C/165:40 | 80°C/0,03 |
| 3.i. (nein) | E.828 + DCD + VP 114 (100 : 6.5 : 3) | 152 | 146 | 3:50 | 143 | 140°C/2:10 | 140°C/2,79 |
| | | | | | | 120°C/14:30 | 120°C/0,63 |
| | | | | | | 100°C/72:55 | 100°C/0,15 |
| | | | | | | 80°C/>480:00 | 80°C/n. a. |
| 3.j. (nein) | E.828 + DCD + VP 115 (100 : 6.5 : 3) | 162 | 152 | 5:45 | 138 | 140°C/3:45 | 140°C/1,54 |
| | | | | | | 120°C/18:25 | 120°C/0,26 |

**Tabelle 3: Erfindungsgemäße Epoxidharz-Zusammensetzungen und deren Härtungsverhalten - Variation der Anteile Härter bei einer Härtungstemperatur von 140 °C**

| *Zusammensetzung Nr. (erfindungsgemäß)* | *Zusammensetzung der Harzformulierung (Teile)* | *dyn. DSC Peak [°C]* | *dyn. DSC Onset [°C]* | *Gelzeit bei 140°C [min:sec]* | *End-Tg [°C]* | *isotherme DSC Peak bei Temp. [min:sec]* | *isotherm. DSC: max. Wärmestrom bei Temp. [W*/*g]* |
|---|---|---|---|---|---|---|---|
| 4.a. (ja) | E.828 + VP 114 (100 : 6) | 182 | 163 | 23:30 | 98 | 140°C/10:50 | 140°C/0,28 |
| 4:b. (ja) | E.828 + VP 114 (100 : 7) | 182 | 163 | 19:45 | 99 | 140°C/11:25 | 140°C/0,28 |
| 4.c.(ja) | E.828 + VP 114 (100 : 9) | 182 | 163 | 16:30 | 96 | 140°C/ 10:30 | 140°C/0,46 |
| 4.d. (ja) | E.828 + VP 114 (100 : 10) | 181 | 163 | 16:00 | 98 | 140°C/10:50 | 140°C/0,48 |
| 4.e. (ja) | E.828 + VP 114 (100 : 11) | 180 | 163 | 14:50 | 94 | 140°C/10:30 | 140°C/0,60 |
| 4.f. (ja) | E.828 + VP 115 (100 : 6) | 197 | 176 | 44:00 | 100 | 140°C/35:15 | 140°C/0,12 |
| 4.g. (ja) | E.828 + VP 115 (100 : 7) | 197 | 176 | 37:00 | 100 | 140°C/29:30 | 140°C/0,16 |
| 4.h. (ja) | E.828 + VP 115 (100 : 9) | 198 | 178 | 34:00 | 100 | 140°C/29:05 | 140°C/0,20 |
| 4.i. (ja) | E.828 + VP 115 (100 : 10) | 196 | 176 | 32:30 | 99 | 140°C/28:05 | 140°C/0,23 |
| 4.j. (ja) | E.828 + VP 115 (100 : 11) | 196 | 176 | 31:45 | 101 | 140°C/26:20 | 140°C/0,25 |
| 4.k. (ja) | E.828 + UR 500 (100 : 6) | 174 | 149 | 18:05 | 98 | 140°C/7:15 | 140°C/0,24 |
| 4.l. (ja) | E.828 + UR 500 (100 : 7) | 174 | 151 | 15:20 | 98 | 140°C/7:25 | 140°C/0,44 |
| 4.m. (ja) | E.828 + UR 500 (100 : 9) | 175 | 151 | 12:05 | 97 | 140°C/6:35 | 140°C/0,54 |
| 4.n. (ja) | E.828 + UR 500 (100: 10) | 173 | 151 | 10:45 | 95 | 140°C/6:35 | 140°C/0,60 |
| 4.o. (ja) | E.828 + UR 500 (100 : 11) | 174 | 150 | 9:50 | 94 | 140°C/6:15 | 140°C/0,73 |

Die Zusammensetzungen 4.a. bis 4.o. der Tabelle 4 wurden entsprechend, wie oben für die Zusammensetzungen 3.a. bis 3.f. beschrieben, hergestellt.

### Zusammenfassung der Ergebnisse

1) Härtungsprofil der Harzformulierungen aus 3.a bis 3.c
   i. Die Harzformulierungen, die gemäß den Punkten 3.a. bis 3.c. hergestellt wurden, zeigen in der dynamischen DSC-Messung, dass sie auch als Alleinhärter eingesetzt werden können. Dabei ist zu erkennen, dass der die Reaktion schon bei 100 °C starten kann, wie das Beispiel UR 500 zeigt. Die breiteren aber weniger hohen Kurven der Harzfomulierungen mit Uronen als Härter zeigen eine langsamere Härtungsreaktion, in der die freiwerdende Energie über einen größeren Temperaturbereich verteilt wird, als bei den Harzformulierungen, in denen die Urone als Beschleuniger mit DCD eingesetzt sind.
   ii. Die Harzformulierungen, die gemäß den Punkten 3.a bis 3.c hergestellt wurden, zeigen in den isothermen DSC-Messungen, dass die eingesetzten Urone als alleinige Härter ohne DCD eingesetzt werden können. Der Vorteil ist dabei, dass die Urone ohne DCD langsamer reagieren und die freigesetzte Wärmemenge über einen größeren Zeitraum verteilt wird, im Gegensatz zum Einsatz der Urone als Beschleuniger von DCD. Je nach eingesetzten Uron kann die Härtung schon bei unter 80 °C erfolgen, wobei der maximale Wärmestrom nicht über 0,99 W/g (bezogen auf die Masse der Epoxidharzmischung) übersteigt.
2) Härtungsprofil der Harzformulierungen aus 3.d bis 3.f
   Die Harzformulierungen, die aus Mischungen verschiedener Urone gemäß den Punkten 3.d. bis 3.f. hergestellt wurden, zeigen, sowohl in der dynamischen DSC-Messung als auch in der isothermen DSC-Messung (Beispiel bei 140 °C), dass Härtungsprofile zwischen den Harzformulierungen mit nur einem Uron als Härter eingestellt werden können, wobei der Wärmestrom in der isothermen DSC-Messung kleiner 0,99 W/g ist.
3) Härtungsprofil der Harzformulierungen aus 4.a bis 4.o
   i. Die Harzformulierungen, die gemäß den Punkten 4.a. bis 4.o. hergestellt wurden, zeigen in der dynamischen DSC-Messung unabhängig vom Anteil des Härters eine langsamere Härtungsreaktion, in der die freiwerdende Energie über einen größeren Temperaturbereich verteilt wird, als bei den Harzformulierungen, in denen die Urone als Beschleuniger mit DCD eingesetzt sind.
   ii. Die Harzformulierungen, die gemäß den Punkten 4.a bis 4.o hergestellt wurden, zeigen in den isothermen DSC-Messungen bei 140 °C, dass die eingesetzten Urone unabhängig vom Anteil des Härters einen maximale Wärmestrom von <0,99 W/g (bezogen auf die Masse der Epoxidharzmischung) erreichen, wie am reaktivsten Uron, UR 500 im Bsp. 4.o, zu sehen ist.

Besonders dicke und/oder ungleichmäßig dicke Bauteile mit einer Dicke >4 mm sind schwierig zu härten. Das Problem ist die genügende und/oder gleichmäßige Abfuhr der während des exothermen Härtungsprozesses entstehenden Wärme bzw. des Wärmestroms, der in besonders kurzer Zeit bei einer Härtung z. B. mit Dicyandiamid und einem Uronbeschleuniger, wie DYHARD UR 500, entsteht. So kannn es in besonders dicken Bauteilen mit Dicken von >10 mm bis 1000 mm zu einem Wärmestau kommen, der das Bauteil thermisch schädigt, im Extremfall bis zur partiellen oder vollständigen Verkohlung. Des Weiteren führt ein zu hoher Wärmestrom bei besonders ungleichmäßig dicken Bauteilen >4 mm Dicke zu einer ungleichmäßig schnellen Härtung innerhalb eines Bauteils, wodurch besonders große Eigenspannungen aufgebaut werden. Beispiele für besonders dicke und/oder ungleichmäßig dicke Formteile bzw. Hohlkörper sind z. B. bei Windkraftanlagen die Profilnase (>4 mm bis >15 mm), insbesondere Steg und Holmen (>25 mm) und insbesondere die Blattwurzel (>10 mm bis >250 mm). Durch Auswahl des geeigneten Härters dieser Erfindung ist es möglich den Wärmestrom so einzustellen, dass die Eigenspannung der gehärteten Formteils bzw. Hohlkörpers möglichst gering ist und es während dem Härtungsprozess nicht zu einer thermischen Schädigung und/oder partiellen oder vollständigen Verkohlung kommt.

## Patentansprüche

1. Verwendung von bis- oder multifunktionalen N,N'-(Dimethyl)-Uronen der allgemeinen Formel (I) oder Mischungen hiervon
R - (NH-CO-N(CH₃)₂)ₙ Formel (I)
wobei
R = ein linearer oder verzweigter aliphatischer Rest, oder
ein cycloaliphatischer Rest, oder
ein nichtsubstituierter, halogensubstituierter und/oder alkylsubstituierter aromatischer Rest, und
n = eine Zahl von 2 bis 20 bedeutet,
als Härter zur kontrollierten Härtung von Epoxidharz-Zusammensetzungen, wobei die Epoxidharz-Zusammensetzung mindestens ein härtbares Epoxidharz umfasst, und wobei die Epoxidharz-Zusammensetzung neben dem N,N'-(Dimethyl)-Uron der allgemeinen Formel (I) oder Mischungen hiervon keine weiteren Härter, Co-Härter, Härtungsbeschleuniger oder andere Katalysatoren zur Härtung von Epoxidharzen umfasst, und wobei die Epoxidharz-Zusammensetzung das N,N'-(Dimethyl)-Uron der allgemeinen Formel (I) oder Mischungen hiervon in einer Menge umfasst, die während der Härtung bei einer Temperatur von 60 bis 180 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet.

2. Verfahren zur kontrollierten Härtung von Epoxidharz-Zusammensetzungen mittels mindestens einem bis- oder multifunktionalem N,N'-(Dimethyl)-Uron der allgemeinen Formel (I) oder Mischungen hiervon als Härter mit
R - (NH-CO-N(CH₃)₂)ₙ Formel (I)
wobei
R = ein linearer oder verzweigter aliphatischer Rest, oder
ein cycloaliphatischer Rest, oder
ein nichtsubstituierter, halogensubstituierter und/oder alkylsubstituierter aromatischer Rest, und
n = eine Zahl von 2 bis 20 bedeutet, und
wobei die Epoxidharz-Zusammensetzung neben dem N,N'-(Dimethyl)-Uron der allgemeinen Formel (I) oder Mischungen hiervon keine weiteren Härter, Co-Härter, Härtungsbeschleuniger oder andere Katalysatoren zur Härtung von Epoxidharzen umfasst, und wobei die Epoxidharz-Zusammensetzung das N,N'-(Dimethyl)-Uron der allgemeinen Formel (I) oder Mischungen hiervon in einer Menge umfasst, die während der Härtung bei einer Temperatur von 60 bis 180 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet.

3. Verwendung oder Verfahren gemäß einem der vorgenannten Ansprüche,
**dadurch gekennzeichnet,**
**dass** die Epoxidharz-Zusammensetzung eine Schichtdicke von mindestens 4 mm, insbesondere mindestens 10 mm und ganz besonders bevorzugt von mindestens 20 mm aufweist.

4. Verwendung oder Verfahren gemäß mindestens einem der vorgenannten Ansprüche,
**dadurch gekennzeichnet,**
**dass** als Epoxidharz mindestens ein Epoxidharz aus der Gruppe der Epoxidharze auf Basis von Glycidylpolyether von 2,2-Bis(4-hydroxyphenyl)propan (Bisphenol A), dessen mit Brom substituiertem Derivat (Tetrabrombisphenol A), Glycidylpolyether von 2,2-Bis(4-hydroxyphenyl)-methan (Bisphenol F) und/oder Glycidylpolyether von Novolac-Harzen verwendet wird.

5. Verwendung oder Verfahren gemäß mindestens einem der vorgenannten Ansprüche,
**dadurch gekennzeichnet,**
**dass** als N,N'-(Dimethyl)-Urone der allgemeinen Formel (I) Bis[4-(N,N-dimethylurea)cyclohexyl]methane (H12MDI-Uron), 1,1'-hexamethylenebis[3,3-dimethyl-urea] (HDI-Uron), N,N"-1,5-naphthalenediylbis[N',N'-dimethyl-urea] (NDI-Uron), 1,1'-m-Xylylenebis(3,3-dimethylurea) (MXDI-Uron), N,N"-1,4-phenylenebis[N',N'-dimethyl-urea] (PDI-Uron), 4,4'-Methylenediphenylene bis(dimethylurea) (MDI-Uron) und/oder 1-(N,N-Dimethylurea)-3-(N,N-dimethylureamethyl)-3,5,5-trimethylcyclohexane (IPDI-Uron) verwendet wird.

6. Verwendung oder Verfahren gemäß mindestens einem der vorgenannten Ansprüche,
**dadurch gekennzeichnet,**
**dass** mindestens zwei verschiedene N,N'-(Dimethyl)-Urone der allgemeinen Formel (I) als Härter eingesetzt werden.

7. Verwendung oder Verfahren gemäß mindestens einem der vorgenannten Ansprüche,
**dadurch gekennzeichnet,**
**dass** die Epoxidharz-Zusammensetzung 0,01 bis 10 Gew-% (bezogen auf die Masse der Epoxidharz-Zusammensetzung) an N,N'-(Dimethyl)-Uron gemäß Formel (I) oder Mischungen hiervon umfasst.

8. Verwendung oder Verfahren gemäß mindestens einem der vorgenannten Ansprüche zur Herstellung von Formteilen, insbesondere Hohlkörper, mit einer Schichtdicke oder Wandung von 4 bis 1000 mm.

9. Epoxidharz-Zusammensetzung zur Herstellung von Formteilen, umfassend
a) mindestens ein härtbares Epoxidharz, und
b) mindestens einen Härter für Epoxidharze ausgewählt aus der Gruppe der bis- oder multifunktionalen N,N'-(Dimethyl)-Urone der allgemeinen Formel (I) oder Mischungen hiervon
R - (NH-CO-N(CH₃)₂)ₙ Formel (I)
wobei
R = ein linearer oder verzweigter aliphatischer Rest, oder
ein cycloaliphatischer Rest, oder
ein nichtsubstituierter, halogensubstituierter und/oder alkylsubstituierter aromatischer Rest, und
n = eine Zahl von 2 bis 20
bedeutet, wobei die Epoxidharz-Zusammensetzung neben dem Härter aus der Gruppe der N,N'-(Dimethyl)-Urone der allgemeinen Formel (I) oder Mischungen hiervon keine weiteren Härter, Co-Härter, Härtungsbeschleuniger oder andere Katalysatoren zur Härtung von Epoxidharzen umfasst, und wobei die Epoxidharz-Zusammensetzung den Härter aus der Gruppe der N,N'-(Dimethyl)-Urone der allgemeinen Formel (I) oder Mischungen hiervon in einer Menge umfasst, die während der Härtung Epoxidharz-Zusammensetzung bei einer Temperatur von 60 bis 180 °C einen maximalen Wärmestrom von 0,05 bis 0,99 W/ g (bezogen auf die Masse der Epoxidharz-Zusammensetzung) in der Epoxidharz-Zusammensetzung erzeugt, so dass die Epoxidharz-Zusammensetzung vollständig aushärtet.

10. Epoxidharz-Zusammensetzung nach Anspruch 9,
**dadurch gekennzeichnet,**
**dass** das härtbare Epoxidharz ausgewählt wird aus der Gruppe der Epoxidharze auf Basis von Glycidylpolyether von 2,2-Bis(4-hydroxyphenyl)propan (Bisphenol A), dessen mit Brom substituiertem Derivat (Tetrabrombisphenol A), Glycidylpolyether von 2,2-Bis(4-hydroxyphenyl)-methan (Bisphenol F) und/oder Glycidylpolyether von Novolac-Harzen.

11. Epoxidharz-Zusammensetzung nach einem der Ansprüche 9 oder 10,
**dadurch gekennzeichnet,**
**dass** die Epoxidharz-Zusammensetzung 0,01 bis 10 Gew-% (bezogen auf die Masse der Epoxidharz-Zusammensetzung) an N,N'-(Dimethyl)-Uron gemäß Formel (I) oder Mischungen hiervon umfasst.

12. Composit-Material oder Formteil umfassend ein Verstärkungs- und/ oder Trägermaterial und eine Epoxidharz-Zusammensetzung nach einem der Ansprüche 9 bis 11.

## Claims

1. Use of bis- or multi-functional N,N'-(dimethyl)-urones of the general formula (I) or mixtures thereof
R-(NH-CO-N(CH₃)₂)ₙ Formula (I)
wherein
R = a linear or branched aliphatic radical, or
a cycloaliphatic radical, or
an unsubstituted, halo-substituted and/or alkyl-substituted aromatic radical, and
n = a number from 2 to 20,
as curing agents for the controlled curing of epoxy resin compositions, wherein the epoxy resin composition comprises at least one curable epoxy resin, and wherein the epoxy resin composition does not comprise any further curing agents, co-curing agents, curing accelerators or other catalysts for the curing of epoxy resins apart from the N,N'-(dimethyl)-urone of the general formula (I) or mixtures thereof, and wherein the epoxy resin composition comprises the N,N'-(dimethyl)-urone of the general formula (I) or mixtures thereof in an amount that, during curing at a temperature of from 60 to 180°C, generates a maximum heat flow in the epoxy resin composition of from 0.05 to 0.99 W/g (based on the mass of the epoxy resin composition), so that the epoxy resin composition cures fully.

2. Method for the controlled curing of epoxy resin compositions, by means of at least one bis-or multi-functional N,N'-(dimethyl)-urone of the general formula (I) or mixtures thereof as curing agent
R-(NH-CO-N(CH₃)₂)ₙ Formula (I)
wherein
R = a linear or branched aliphatic radical, or
a cycloaliphatic radical, or
an unsubstituted, halo-substituted and/or alkyl-substituted aromatic radical, and
n = a number from 2 to 20,
wherein the epoxy resin composition does not comprise any further curing agents, co-curing agents, curing accelerators or other catalysts for the curing of epoxy resins apart from the N,N'-(dimethyl)-urone of the general formula (I) or mixtures thereof, and wherein the epoxy resin composition comprises the N,N'-(dimethyl)-urone of the general formula (I) or mixtures thereof in an amount that, during curing at a temperature of from 60 to 180°C, generates a maximum heat flow in the epoxy resin composition of from 0.05 to 0.99 W/g (based on the mass of the epoxy resin composition), so that the epoxy resin composition cures fully.

3. Use or method according to any of the preceding claims, **characterised in that** the epoxy resin composition has a layer thickness of at least 4 mm, in particular at least 10 mm and most particularly preferably of at least 20 mm.

4. Use or method according to at least one of the preceding claims, **characterised in that** there is used as the epoxy resin at least one epoxy resin from the group of the epoxy resins based on glycidyl polyether of 2,2-bis(4-hydroxyphenyl)propane (bisphenol A), its bromine-substituted derivative (tetrabromobisphenol A), glycidyl polyether of 2,2-bis(4-hydroxyphenyl)-methane (bisphenol F) and/or glycidyl polyether of novolak resins.

5. Use or method according to at least one of the preceding claims, **characterised in that** there are used as the N,N'-(dimethyl)-urones of the general formula (I) bis[4-(N,N-dimethylurea)-cyclohexyl]methane (H12MDI-urone), 1,1'-hexamethylenebis[3,3-dimethylurea] (HDI-urone), N,N"-1,5-naphthalenediylbis[N',N'-dimethylurea] (NDI-urone), 1,1'-m-xylylenebis(3,3-dimethylurea) (MXDI-urone), N,N"-1,4-phenylenebis[N',N'-dimethylurea] (PDI-urone), 4,4'-methylenediphenylene bis(dimethylurea) (MDI-urone) and/or 1-(N,N-dimethylurea)-3-(N,N-dimethylureamethyl)-3,5,5-trimethylcyclohexane (IPDI-urone).

6. Use or method according to at least one of the preceding claims, **characterised in that** at least two different N,N'-(dimethyl)-urones of the general formula (I) are used as curing agent.

7. Use or method according to at least one of the preceding claims, **characterised in that** the epoxy resin composition comprises from 0.01 to 10 wt.% (based on the mass of the epoxy resin composition) N,N'-(dimethyl)-urone according to formula (I) or mixtures thereof.

8. Use or method according to at least one of the preceding claims for the production of mouldings, in particular hollow articles, having a layer thickness or wall of from 4 to 1000 mm.

9. Epoxy resin composition for the production of mouldings, comprising
a) at least one curable epoxy resin, and
b) at least one curing agent for epoxy resins selected from the group of the bis- or multi-functional N,N'-(dimethyl)-urones of the general formula (I) or mixtures thereof
R-(NH-CO-N(CH₃)₂)ₙ Formula (I)
wherein
R = a linear or branched aliphatic radical, or
a cycloaliphatic radical, or
an unsubstituted, halo-substituted and/or alkyl-substituted aromatic radical, and
n = a number from 2 to 20,
wherein the epoxy resin composition does not comprise any further curing agents, co-curing agents, curing accelerators or other catalysts for the curing of epoxy resins apart from the curing agent from the group of the N,N'-(dimethyl)-urones of the general formula (I) or mixtures thereof, and wherein the epoxy resin composition comprises the curing agent from the group of the N,N'-(dimethyl)-urones of the general formula (I) or mixtures thereof in an amount that, during curing of the epoxy resin composition at a temperature of from 60 to 180°C, generates a maximum heat flow in the epoxy resin composition of from 0.05 to 0.99 W/g (based on the mass of the epoxy resin composition), so that the epoxy resin composition cures fully.

10. Epoxy resin composition according to claim 9, **characterised in that** the curable epoxy resin is selected from the group of the epoxy resins based on glycidyl polyether of 2,2-bis(4-hydroxyphenyl)propane (bisphenol A), its bromine-substituted derivative (tetrabromobisphenol A), glycidyl polyether of 2,2-bis(4-hydroxyphenyl)-methane (bisphenol F) and/or glycidyl polyether of novolak resins.

11. Epoxy resin composition according to either claim 9 or claim 10, **characterised in that** the epoxy resin composition comprises from 0.01 to 10 wt.% (based on the mass of the epoxy resin composition) N,N'-(dimethyl)-urone according to formula (I) or mixtures thereof.

12. Composite material or moulding comprising a reinforcing and/or carrier material and an epoxy resin composition according to any of claims 9 to 11.

## Revendications

1. Utilisation de N,N'-(diméthyl)urones bis- ou polyfonctionnelles, de la formule générale (I) ou de leurs mélanges :
R-(NH-CO-N(CH₃)₂)ₙ formule (I)
où
R représente un reste aliphatique linéaire ou ramifié, un reste cycloaliphatique, ou un reste aromatique non substitué, substitué par halogène et/ou substitué par alkyle, et
n représente un nombre allant de 2 à 20,
comme durcisseur pour le durcissement contrôlé de compositions de résine époxyde, où la composition de résine époxyde comprend au moins une résine époxyde durcissable et où la composition de résine époxyde ne comprend à part la N,N'-(diméthyl)urone de formule générale (I) ou des mélanges de celle-ci, aucun autre durcisseur, co-durcisseur, activateur du durcissement ou autre catalyseur pour le durcissement des résines époxyde, et où la composition de résine époxyde comprend la N,N'-(diméthyl)urone de formule générale (I) ou des mélanges de celle-ci, en une quantité qui produit pendant le durcissement à une température allant de 60 à 180°C, un flux de chaleur maximal de 0,05 à 0,99 W/g (sur base de la masse de composition de résine époxyde) dans la composition de résine époxyde, de sorte que la composition de résine époxyde durcisse complètement.

2. Procédé pour le durcissement contrôlé de compositions de résine époxyde à l'aide d'au moins une N,N'-(diméthyl)urone bis- ou polyfonctionnelle, de la formule générale (I) ou de ses mélanges comme durcisseur,
R-(NH-CO-N(CH₃)₂)ₙ formule (I)
où
R représente un reste aliphatique linéaire ou ramifié, ou un reste cycloaliphatique, ou un reste aromatique non substitué, substitué par halogène et/ou alkyle, et
n représente un nombre allant de 2 à 20, et
où la composition de résine époxyde ne comprend à part de la N,N'-(diméthyl)urone de formule générale (I) ou des mélanges de celle-ci, aucun autre durcisseur, co-durcisseur, activateur du durcissement ou autre catalyseur pour le durcissement des résines époxyde, et où la composition de résine époxyde comprend la N,N'-(diméthyl)urone de formule générale (I) ou des mélanges de celle-ci, en une quantité qui produit pendant le durcissement à une température allant de 60 à 180°C, un flux de chaleur maximal de 0,05 à 0,99 W/g (sur base de la masse de composition de résine époxyde) dans la composition de résine époxyde, de sorte que la composition de résine époxyde durcisse complètement.

3. Utilisation ou procédé selon l'une des revendications précédentes, **caractérisé en ce que** la composition de résine époxyde présente une épaisseur de couche d'au moins 4 mm, en particulier au moins 10 mm et de manière particulièrement préférée, au moins 20 mm.

4. Utilisation ou procédé selon l'une des revendications précédentes, **caractérisé en ce que** l'on utilise comme résine époxyde, au moins une résine époxyde du groupe des résines époxyde à base de glycidylpolyéther de 2,2-bis(4-hydroxyphényl)propane (bisphénol A), ses dérivés substitués par du brome (tétrabromobisphénol A), glycidylpolyéther de 2,2-bis(4-hydroxyphényl)méthane (bisphénol F) et/ou glycidylpolyéther de résines novolaque.

5. Utilisation ou procédé selon l'une des revendications précédentes, **caractérisé en ce que** l'on utilise comme N,N'-(diméthyl)urone de formule générale (I), la bis[4-(N,N-diméthylurée)cyclohexyl]-méthane (H12MDI-urone), la 1,1'-hexaméthylènebis[3,3-diméthylurée] (HDI-urone), la N,N"-1,5-naphtalènediyl-bis[N',N'-diméthylurée] (NDI-urone), la 1,1'-m-xylylènebis(3,3-diméthylurée) (MXDI-urone), la N,N" - 1,4-phénylènebis(N',N'-diméthylurée) (PDI-urone), la 4,4'-méthylènediphénylènebis(diméthylurée) (MDI-urone) et/ou la 1-(N,N-diméthylurée)-3-(N,N-diméthylurée-méthyl)-3,5,5-triméthylcyclohexane (IPDI-urone).

6. Utilisation ou procédé selon l'une des revendications précédentes, **caractérisé en ce que** l'on met en oeuvre, au moins deux N,N'-(diméthyl)urones de formule générale (I) différentes comme durcisseur.

7. Utilisation ou procédé selon l'une des revendications précédentes, **caractérisé en ce que** la composition de résine époxyde comprend 0,01 à 10% en poids (sur base de la masse de la composition de résine époxyde) de N,N'-(diméthyl)urone de formule générale (I) ou de mélanges de celle-ci.

8. Utilisation ou procédé selon l'une des revendications précédentes, pour la préparation d'articles moulés, en particulier des corps creux, avec une épaisseur de couche ou paroi de 4 à 1000 mm.

9. Composition de résine époxyde pour la préparation d'articles moulés, comprenant :
a) au moins une résine époxyde durcissable, et
b) au moins un durcisseur pour résine époxyde, choisi parmi le groupe des N,N'-(diméthyl)urones bisou polyfonctionnelles, de la formule générale (I) ou des mélanges de celles-ci:
R-(NH-CO-N(CH₃)₂)ₙ formule (I)
où
R représente un reste aliphatique linéaire ou ramifié, ou un reste cycloaliphatique, ou un reste aromatique non substitué, substitué par halogène et/ou substitué par alkyle, et
n représente un nombre allant de 2 à 20,
où la composition de résine époxyde ne comprend à part la N,N'-(diméthyl)urone de formule générale (I) ou des mélanges de celle-ci, aucun autre durcisseur, co-durcisseur, activateur du durcissement ou autre catalyseur pour le durcissement des résines époxyde, et où la composition de résine époxyde comprend la N,N'-(diméthyl)urone de formule générale (I) ou des mélanges de celle-ci, en une quantité qui produit pendant le durcissement à une température allant de 60 à 180°C, un flux de chaleur maximal de 0,05 à 0,99 W/g (sur base de la masse de composition de résine époxyde) dans la composition de résine époxyde, de sorte que la composition de résine époxyde durcisse complètement.

10. Composition de résine époxyde selon la revendication 9, **caractérisée en ce que** la résine époxyde durcissable est choisie parmi le groupe des résines époxyde à base de glycidylpolyéther de 2,2-bis(4-hydroxyphényl)propane (bisphénol A), ses dérivés substitués par du brome (tétrabromobisphénol A), glycidylpolyéther de 2,2-bis(4-hydroxyphényl)méthane (bisphénol F) et/ou glycidylpolyéther de résines novolaque.

11. Composition de résine époxyde selon la revendication 9 ou 10, **caractérisée en ce que** la composition de résine époxyde comprend 0,01 à 10% en poids (sur base de la masse de composition de résine époxyde) de N,N'-(diméthyl)urone de formule générale (I) ou des mélanges de celle-ci.

12. Matériau composite ou article moulé comprenant un matériau de renforcement et/ou de support et une composition de résine époxyde selon l'une des revendications 9 à 11.
